## Europäisches Patentamt
## European Patent Office
## Office européen des brevets

(11) Veröffentlichungsnummer: **0 294 332**
**A1**

## (12) EUROPÄISCHE PATENTANMELDUNG

(21) Anmeldenummer: 88810346.2

(22) Anmeldetag: 27.05.88

(51) Int. Cl.⁴: **B 65 G 1/02**
A 47 B 57/56

(30) Priorität: 01.06.87 CH 2079/87

(43) Veröffentlichungstag der Anmeldung:
07.12.88 Patentblatt 88/49

(84) Benannte Vertragsstaaten:
AT CH DE ES FR IT LI NL

(71) Anmelder: Sieber, Hans
Alpsteinstrasse 4
CH-9524 Zuzwil (CH)

(72) Erfinder: Sieber, Hans
Alpsteinstrasse 4
CH-9524 Zuzwil (CH)

(74) Vertreter: Kulhavy, Sava, Dipl.-Ing.
Patentanwaltsbüro S.V. Kulhavy Postfach 450
Kornhausstrasse 3
CH-9001 St. Gallen (CH)

(54) Lagergestell.

(57) Das Lagergestell enthält Stützen (1) und an der jeweiligen Stütze angebrachte Kragarme (2). Der Kragarm (2) ist mit einer Vorrichtung (10) zur stufenlosen Befestigung des Kragarms an der Stütze (1) versehen. Die Befestigungsvorrichtung (10) weist einen am Fuss des Kragarmauslegers (5) befestigten Auflageabschnitt (15) sowie Mittel (20) auf, die zum Anpressen des Auflageabschnittes (15) auf den Stehteil (3) ausgebildet sind. Der Auflageabschnitt (15) ist im horizontalen Querschnitt U-förmig und im Inneren dieses befinden sich die genannten Anpressmittel (20), welche den Stehteil (3) hintergreifen. Diese Mittel enthalten Anpresshälften (26,27), die mit Hilfe von Schrauben(40) mit dem Auflageabschnitt (15) verbunden sind.

Der Kragarm ist bei einem solchen Lagergestell stufenlos und ohne Probleme verstellbar und trotzdem ist der Kragarm extrem belastbar.

FIG. 2

EP 0 294 332 A1

## Beschreibung

## Lagergestell

Die vorliegende Erfindung betrifft ein Lagergestell, mit Stützen und mit wenigstens einem an der jeweiligen Stütze angebrachten Kragarm.

Bei einem bekannten Lagergestell dieser Gattung ist das Profil des vertikal verlaufenden Stehteiles der Gestellstütze U-förmig. Die in diesem Stehteil zu befestigende Fusspartie des Kragarmes befindet sich zwischen zwei Seitenwänden, welche die Schenkel des Stehteiles mit U-Profil bilden. Zwischen diesen Seitenwänden erstrecken sich Bolzen, welche übereinander liegen und sich in bestimmten Abständen voneinander befinden. Der Ausleger des Kragarmes weist ein I-Profil auf, wobei die Breite der horizontalen Querstege eines solchen Profilkörpers kleiner ist als der Abstand zwischen den Seitenwänden des Stehteiles. Auf der Oberseite des oberen horizontalen Quersteges ist ein Anschlag, beispielsweise durch Schweissen, befestigt, und zwar ganz am Fussende des genannten Quersteges. Dieser Anschlag hintergreift einen der Bolzen der Gestellstütze. Jener Abschnitt des vertikal verlaufenden Verbindungssteg des Kragarmes mit I-förmigem Querschnitt, welcher sich im Fussbereich des Kragarmes befindet, ist nach vorne abgeschrägt, so dass auch ein Endabschnitt des unteren Quersteges wegfällt. Die genannte Abschrägung ist zudem derart ausgeführt, dass sie eine Stufe aufweist.

Diese Abschrägung liegt auf dem unter dem bereits genannten Bolzen liegenden Bolzen im Stehteil auf.

Obwohl die Kragarme dieses Lagergestelles entlang dem Stehteil der Gestellstütze problemlos verstellt werden können, wobei sie trotzdem sehr tragfähig sind, weist dieses Lagergestell den Nachteil auf, dass die Höhe der Kragarme nur stufenweise, d.h. entsprechend dem Abstand zwischen den übereinander liegenden Bolzen verstellt werden kann. Dies wirkt sich vor allem dann nachteilig aus, wenn Bleche in den Fächern eines solchen Gestells gelagert sind. Die Dicke bzw. Höhe der Blechpakete kann verhältnismässig klein sein, so dass für die Lagerung solcher Blechpakete ein Lagerfach von geringer Höhe ausreichen würde. Da die Höhe der Fächer bei diesem vorbekannten Gestell jedoch durch den Abstand der Bolzen gegeben ist, bleibt verhältnismässig viel Lagerraum unausgenützt.

Eine der Aufgaben dieser Erfindung ist, ein Lagergestell anzugeben, bei dem die Höhe der Kragarme stufenlos verstellt werden kann.

Diese Aufgabe wird beim Lagergestell der eingangs genannten Gattung erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt:

Fig. 1 in Frontansicht einen Ausschnitt aus dem vorliegenden Lagergestell und

Fig. 2 in einem teilweisen horizontalen Schnitt den in Fig. 1 dargestellten Ausschnitt aus dem vorliegenden Lagergestell.

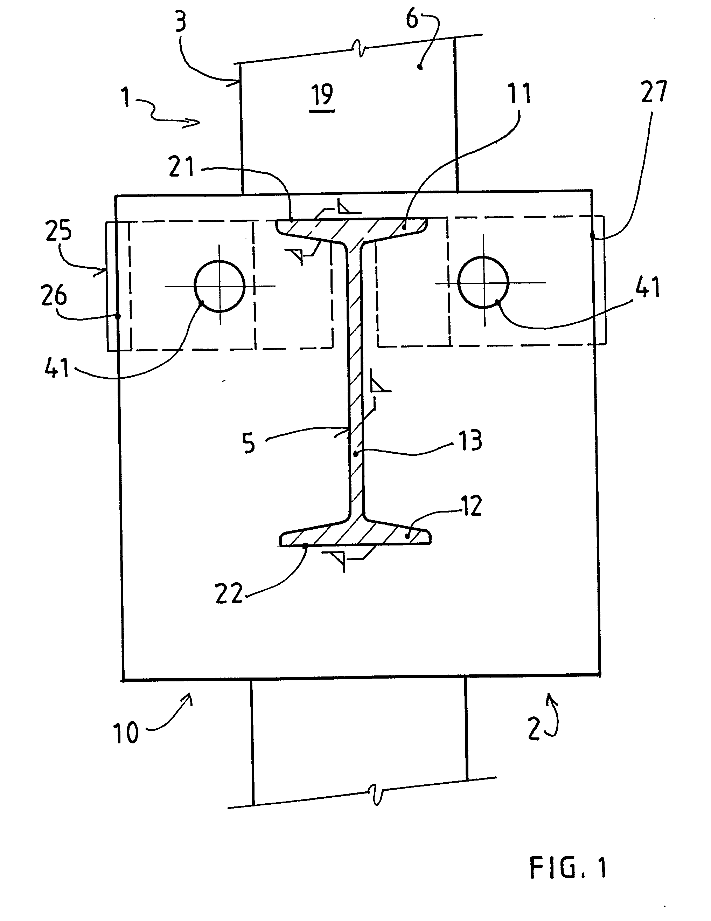

Fig. 1 zeigt in Frontansicht einen Ausschnitt aus einer der Stützen 1 des vorliegenden Lagergestelles. Dieser Ausschnitt umfasst jene Partie der Stütze 1, an die einer der Kragarme 2 des Lagergestells angeschlossen ist.

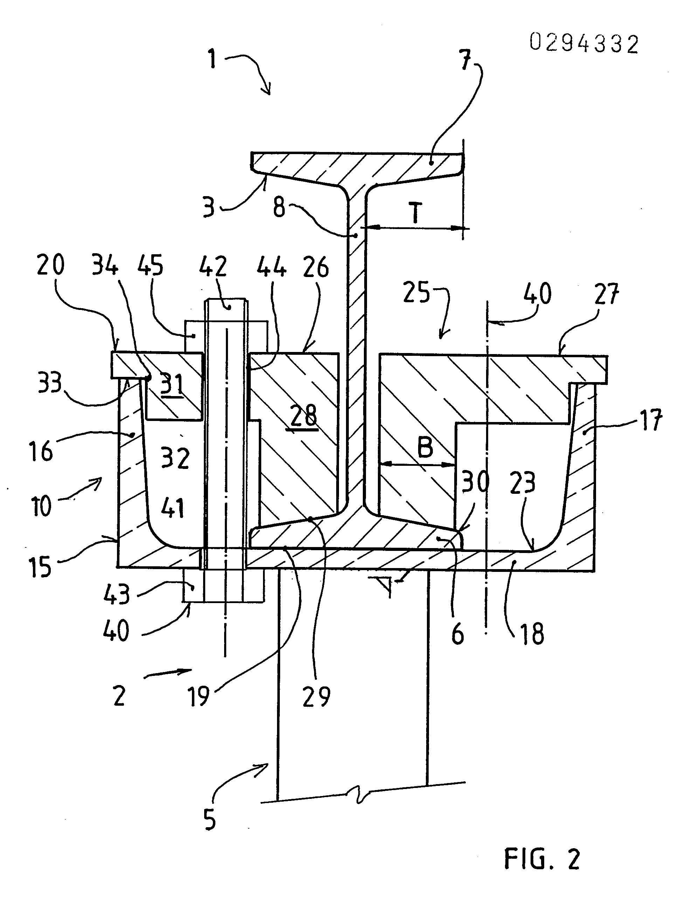

Jedes Lagergestell enthält zumindest zwei nebeneinander stehende Stützen 1, die vorteilhaft etwa L-förmig sind. Eine solche Stütze 1 weist einen Stehteil 3 auf, an den sich ein Fussteil (nicht dargestellt) anschliesst. Dieser Fussteil stellt den horizontalen Schenkel der L-förmigen Stütze 1 dar. Am Stehteil 3 ist wenigstens ein Kragarm 2 befestigt, wobei auf solchen Kragarmen 2 das Lagergut, direkt oder in Paletten (nicht dargestellt) untergebracht, gelagert ist. Wie aus Fig. 2 ersichtlich ist, weist der Stehteil 3 der Stütze 1 im dargestellten Beispiel einen I-förmigen Querschnitt auf. Im Prinzip kann der Stehteil 3 jedoch auch einen T-förmigen Querschnitt aufweisen, wenn dies die Umstände erlauben. Dies kann beispielsweise dann der Fall sein, wenn die angenommene Belastung der Stehteile 3 durch die Kragarme 2 nicht sehr gross ist, wenn die Kragarme 2 nur an einer Seite der Stehteile 3 angebracht werden sollen usw.

Aus Fig. 2 sind der vordere Quersteg 6, der hintere Quersteg 7 und der diese verbindende Steg 8 des I-Profils ersichtlich. Der Stehteil 3 ist in einer bekannten Weise mit dem Fussteil verbunden. Im dargestellten Beispiel ist nur ein Kragarm 2 am vorderen Quersteg 6 befestigt. In der Tat werden Kragarme 2 jedoch auch am hinteren Quersteg 7 angebracht, so dass der Stehteil 3 an seinen beiden Seiten etwa gleichmässig belastet wird. Der Stehteil 3 von I-förmigem Querschnitt weist die hierzu erforderliche Stabilität auf. In solchen Fällen wird sich der Fussteil der Stütze allerdings zu den beiden Seiten des Stehteiles 3 erstrecken.

Der Kragarm 2 besteht aus einem Ausleger 5 und einer Vorrichtung 10 zur stufenlosen Befestigung des Kragarms 2 am Stehteil 3. Diese Vorrichtung 10 befindet sich an dem der Stützte 1 zugewandten Ende des Auslegers 5. Der Ausleger 5 weist ebenfalls einen I-förmigen Querschnitt auf, wobei aus Fig. 1 der obere Quersteg 11, der untere Quersteg 12 und der diese verbindende Steg 13 dieses I-Profils ersichtlich sind.

Die Befestigungsvorrichtung 10 umfasst einen Auflageabschnitt 15, der am Fusse des Auslegers 5 befestigt ist. Ferner umfasst die Befestigungsvorrichtung 10 Mittel 20 zum Anpressen des Auflageabschnittes 15 auf den Stehteil 3 der Stütze 1.

Der Auflageabschnitt 15 der Befestigungsvorrichtung 10 weist einen U-förmigen Querschnitt auf. Aus Fig. 2 sind die beiden Schenkel 16 und 17 sowie der diese verbindende Grundteil 18 des U-Profils ersichtlich. Die plane Innenfläche 23 dieses Grundteils 18 dient als jene Fläche, über welche der Kragarm 2 auf einer der Seitenflächen, im vorliegenden Fall ist dies die Seiten- bzw. Frontfläche 19 des vorderen Quersteges 6, des Stehteiles 3 aufliegt. Die Schenkel 16 und 17 des U-Profils 15 erstrecken sich dann rückwärts bis etwa in den mittleren Bereich des Verbindungssteges 8 des Stehteiles 3. Die freien Endpartien der Schenkel 16 und 17 befinden sich somit hinter dem Quersteg 6 des Stehteiles 3. Die diesen Quersteg 6 enthaltende Partie bzw. Hälfte des Stehteiles 3 befindet sich somit im Inneren des Auflageabschnittes 15 des Kragarmes 2.

Das Fussende des Auslegers 5 ist an der Aussenseite des Grundteiles 18 befestigt, und zwar mittels einer ersten und dem oberen Abschnitt des Auslegers 5 zugeordneten Schweissnaht 21 sowie mittels einer zweiten und sich im Bereich des unteren Quersteges 12 befindlichen Schweissnaht 22. Da die Zugbeanspruchung im Bereich des oberen Quersteges 11 gross ist, umgibt die erste Schweissnaht 21 den oberen Quersteg 11 und sie erstreckt sich dann abwärts bis etwa zur Mitte des Verbindungssteges 13. Die untere Schweissnaht 22 ist verhältnismässig kurz und sie erstreckt sich lediglich unter dem unteren Quersteg 12.

Die Mittel 20 zum Anpressen des Auflageabschnittes 15 gegen eine der Seitenflächen 19 des Stehteiles 3 der Stütze 1 befinden sich grösstenteils im Inneren des Auflageabschnittes 15 und sie hintergreifen dabei diesen Stehteil 3. Sie umfassen wenigstens ein Anpresstück 25, welches den Stehteil 3 hintergreift. Die Klemmung des Stehteiles 3 zwischen dem Auflageabschnitt 15 und dem Anpresstück 25 erfolgt mit Hilfe von Klemmitteln 40, welche ebenfalls einen Bestandteil der Anpressmittel 20 darstellen und welche im dargestelten Beispiel als Schrauben ausgeführt sind. Die Höhe des Anpresstückes 25 ist wesentlich kleiner als die Höhe des Auflageabschnittes 15 und es befindet sich im oberen Bereich des Auflageabschnittes 15.

Im dargestellten Beispiel weist das Anpresstück 25 zwei Hälften 26 und 27 auf, die in einem horizontalen Querschnitt praktisch L-förmig sind. Der erste Schenkel 28 der L-förmigen Hälfte 26 bzw. 27 verläuft etwa parallel zum Verbindungssteg 8 des Stehteiles 3 und die Stirnfläche 29 dieses Schenkels 28 liegt auf einem der zwei Abschnitte der Rückseite 30 des vorderen Quer steges 6 des Stehteiles 3 auf. Da es bei I-Profilen üblich ist, die Rückseite 30 des jeweiligen Quersteges 6 bzw. 7 aus Festigkeitsgründen geneigt auszuführen, verläuft die Stirnfläche 29 dieses Schenkels 28 auch dementsprechend geneigt, um eine möglichst grosse Berührungs- und somit auch Reibungsfläche zwischen dieser Stirnfläche 29 und der entsprechenden Hälfte der Rückseite 30 des Quersteges 6 zu erzielen. Die Breite B dieses ersten Schenkels 28 ist so gewählt, dass sie nur ein wenig kleiner ist als die Breite bzw. Tiefe T des Stehteiles 3 mit I-förmigem Querschnitt. Dadurch wird eine grössere Breite der Stirnfläche 29 des ersten Schenkels 28 erreicht, woraus dann auch ein maximal erreichbarer Reibungswiderstand zwischen der Stirnfläche 29 und der Rückseite 30 des Quersteges 6 resultiert.

Der andere Schenkel 31 der L-förmigen Anpresstückhälfte 26 bzw. 27 verläuft praktisch rechtwinklig zum Verbindungssteg 8 des Stehteiles 3. Die Breite dieses zweiten Steges 31 kann der Breite B des ersten Steges 28 gleichen oder sie kann kleiner oder grösser als diese sein. Die Innenfläche 32 dieses zweiten Schenkels 31 liegt auf der Stirnfläche 33 des zugehörigen Schenkels 16 bzw. 17 des U-förmigen Auflageabschnittes 15 auf. Um zu verhindern, dass sich der zweite Schenkel 31 auf der genannten Stirnfläche 33 verschiebt, was während der Montage des Gestells vorkommen könnte, ist die dieser Stirnfläche 33 zu gewandte Eckpartie dieses Schenkels 31 mit einer praktisch rechtwinkligen Ausnehmung 34 versehen, in der die Stirnpartie 33 des U-Schenkels 16 bzw. 17 liegt.

Wie bereits erwähnt worden ist, sind die Klemmittel 40 als eine Schraube ausgeführt. Im oberen Bereich des Auflageabschnittes 15 sind Bohrungen 41 zu den beiden Seiten des Auslegers 5 ausgeführt, durch welche der Bolzen 42 der jeweiligen Schraube 40 hindurchgeht, wobei der Kopf 43 der Schrauben 40 sich vorne, neben dem Ausleger 5 befindet. Der zweite Schenkel 31 der jeweiligen L-förmigen Hälfte 26 bzw. 27 des Anpresstückes 25 ist ebenfalls mit einer Bohrung 44 versehen, die der Bohrung 41 im Auflageabschnitt 15 gegenüberliegt, wenn sich das Gestell im zusammengesetzten Zustand befindet. Folglich kann die Schraube 40 durch diese zweite Bohrung 44 im zweiten Schenkel 31 ebenfalls hindurchgehen. Auf dem Gewindeende der Schraube 40 ist eine Mutter 45 aufgeschraubt, welche das L-förmige Stück 26 bzw. 27 gegen den Auflageabschnitt 15 andrückt.

Die mit dem Absatz 34 versehene Endpartie des zweiten Schenkels 31 des L-Stückes 26 bzw. 27 stützt sich, wie bereits gesagt worden ist, auf der Endpartie 33 des jeweiligen U-Schenkels 16 bzw. 17 ab. Da die Schraube 40 an einer Stelle des zweiten L-Schenkels 31 einwirkt, welche zwischen dem zugehörigen U-Schenkel 16 bzw. 17 und dem ersten L-Schenkel 28 liegt, wird die Stirnfläche 29 dieses ersten L-Schenkels 28 durch die Mutter 45 auf die Rückseite 30 des vorderen Quersteges 6 angepresst. Folglich wird die jeweilige Hälfte des genannten Querschenkels 6 zwischen dem L-Stück 26 bzw. 27 und der Innenfläche 23 des Auflagestückes 15 geklemmt. Durch das Anziehen der Muttern 45 kann der Kragarm 2 somit in der Höhe des Stehteiles 3 der Stütze 1 befestigt werden, in der sich der Kragarm jeweils befindet. Die Reibung zwischen den Frontflächen 29 der Anpresstückhälften 26 bzw. 27 und den entsprechenden Abschnitten der Rückseite 30 sowie zwischen der Innenfläche 23 des Auflageabschnittes 15 und der Frontfläche 19 des Quersteges 6 des Stehteiles 3 reicht ohne weiteres dazu aus, um den Kragarm 2 auch unter einer extremen Belastung durch das Lagergut in der eingestellten Höhe zu halten.

**Patentansprüche**

1. Lagergestell, mit Stützen und mit wenigstens einem an der jeweiligen Stütze angebrachten Kragarm, dadurch gekennzeichnet, dass der Kragarm (2) mit einer Vorrichtung (10) zur stufenlosen Befestigung des Kragarms an der Stütze (1) versehen ist.

2. Lagergestell nach Anspruch 1, dadurch gekennzeichnet, dass die Befestigungsvorrichtung (10) einen am Fuss des Kragarmauslegers (5) befestigten Auflageabschnitt (15) aufweist und dass die Befestigungsvorrichtung (10) ferner Mittel (20) umfasst, die zum Anpressen des Auflageabschnitts (15) auf den Stehteil (3) ausgebildet sind.

3. Lagergestell nach Anspruch 2, dadurch gekennzeichnet, dass der Auflageabschnitt (15) im horizontalen Querschnitt U-förmig ist, dass an die Aussenseite des die Schenkel (16,17) des U-Profils verbindenden Grundteiles (18) der Ausleger (5) angeschlossen ist, dass der Grundteil (18) eine plane Fläche (23) aufweist, über welche der Kragarm (2) auf einer der Seitenflächen (19) des Stehteiles (3) der Stütze aufliegt, und dass die Anpressmittel (20) sich im Inneren des U-Profils (15) befinden und den Stehteil (3) hintergreifen.

4. Lagergestell nach Anspruch 2, dadurch gekennzeichnet, dass die Anpressmittel (20) wenigstens ein Anpresstück (25) aufweisen, welches an jener Seite des Stehteiles (3) angreift, die der mit dem Auflageabschnitt (15) in Berührung stehenden Seite (19) des Stehteiles (3) gegenüberliegt und dass dieses Anpresstück (25) mit Hilfe von Klemmitteln (40) , wie z.B. von Schrauben, mit dem Auflageabschnitt (15) verbunden ist.

5. Lagergestell nach Anspruch 4, dadurch gekennzeichnet, dass die Höhe des Anpresstückes (25;26,27) kleiner ist als die Höhe des Auflageabschnittes (15) und dass das Anpresstück sich im oberen Bereich des Auflageabschnittes befindet.

6. Lagergestell nach Anspruch 2, dadurch gekennzeichnet, dass der Stehteil (3) der Stütze (1) einen I- oder T-förmigen Querschnitt aufweist, dass der Auflageabschnitt (15) auf der Frontseite (19) eines der Querstege (6) eines solchen Stehteiles (3) aufliegt und dass das Anpresstück (26,27) auf der Rückseite (30) dieses Quersteges (6) aufliegt.

7. Lagergestell nach Anspruch 6, dadurch gekennzeichnet, dass das Anpresstück (25) aus zwei Hälften (26,27) besteht, dass die jeweilige Anpresstückhälfte (26 bzw. 27) im horizontalen Querschnitt L-förmig ist, dass die jeweilige Anpresstückhälfte mit Hilfe eines der Klemmittel (40) mit dem Auflageabschnitt (15) verbunden ist, dass die Frontseite (29) eines der Schenkel (28) der Anpresstückhälften (26,27) auf der Rückseite (30) der entsprechenden Hälfte des vorderen Quersteges (6) aufliegt und dass die innere Fläche des anderen Schenkels (31) der L-förmigen Anpresstückhälfte (26 bzw. 27) auf der Frontseite (33) des zugehörigen Schenkels (16 bzw. 17) des Auflageabschnittes (15) aufliegt.

8. Lagergestell nach Anspruch 7, dadurch gekennzeichnet, dass die Innenseite der Endpartien des zweiten Schenkels (31) der L-förmigen Anpresstückhälfte einen Absatz (34) aufweist und dass die Frontkante (33) des zugehörigen U-Schenkels (16 bzw. 17) in diesem Absatz (34) liegt.

FIG. 1

FIG. 2

| | | | |
|---|---|---|---|
| Europäisches Patentamt | **EUROPÄISCHER RECHERCHENBERICHT** | | Nummer der Anmeldung |

## EINSCHLÄGIGE DOKUMENTE

EP 88810346.2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A1 - 2 800 239 (FRAZIER)<br>* Seite 9, Zeile 4; Fig. 1,2 * | 1-3 | B 65 G 1/02<br>A 47 B 57/56 |
| A | | 6 | |
| X | US - A - 2 719 692 (GREDELL)<br>* Spalte 1, Zeilen 28-33;<br>Spalte 2, Zeile 57 - Spalte 3,<br>Zeile 26; Fig. 1,4 * | 1 | |
| A | | 4,5,7 | |
| X | GB - A - 1 126 854 (FRAZIER)<br>* Seite 1, Zeile 77 - Seite 2,<br>Zeile 29; Fig. 3-5 * | 1 | |
| A | | 4,6,7 | |

RECHERCHIERTE SACHGEBIETE (Int Cl.4)

A 47 B 57/00

A 47 B 96/00

B 65 G

Der vorliegende Recherchenbericht wurde für alle Patentansprüche erstellt.

| Recherchenort | Abschlußdatum der Recherche | Prüfer |
|---|---|---|
| WIEN | 02-09-1988 | PISSENBERGER |